# EUROPÄISCHE PATENTANMELDUNG

(11) **EP 4 202 004 A1**
(43) Veröffentlichungstag der Anmeldung: **28.06.2023**
(21) Anmeldenummer: 22215086.4
(22) Anmeldetag: 20.12.2022
(51) Int. Cl.: C09J 133/04, C09J 7/38, B41N 6/00, C09J 133/06, C08F 220/18

(54) **HAFTKLEBEMASSE FÜR DIE VERKLEBUNG VON DRUCKPLATTEN**

(30) Priorität: 21.12.2021 DE 102021133983
(71) Anmelder: tesa SE, 22848 Norderstedt (DE)
(72) Erfinder: PÜTZ, Benjamin, 41464 Neuss (DE); KRETZMER, Ralf, 22391 Hamburg (DE); MAYER, Bianca, 22455 Hamburg (DE); ENGEL, Alexander, 22303 Hamburg (DE)
(74) Vertreter: tesa SE

(57) **Zusammenfassung**

Die Erfindung betrifft eine Haftklebemasse für die Verklebung von Druckplatten, umfassend ein oder mehrere Poly(meth)acrylate in einem kombinierten Massenanteil von 50 % oder mehr, bezogen auf die Masse der Haftklebemasse, wobei das eine oder die mehreren Poly(meth)acrylate herstellbar sind durch Polymerisation einer Monomerzusammensetzung umfassend bezogen auf die Masse der Monomerzusammensetzung: i) ein oder mehrere erste Monomere, die ausgewählt sind aus der Gruppe bestehend aus Acrylsäure, Methacrylsäure, Dimethylacrylamid, Hydroxybutylacrylat, Hydroxypropylacrylat und Hydroxyethylacrylat in einem kombinierten Massenanteil im Bereich von 10 bis 20 %, und ii) ein oder mehrere zweite Monomere, die ausgewählt sind aus der Gruppe bestehend aus (Meth)acrylsäureestern gemäß der Formel (I), CH₂=CR¹-C(O)O-CHR²R³(I), wobei R¹ für ein Wasserstoffatom oder eine Methylgruppe steht, wobei entweder i) R² für ein Wasserstoffatom und R³ für eine verzweigte Alkylgruppe mit 16 bis 20 C-Atomen steht, oder ii) R² für eine lineare oder verzweigte Alkylgruppe mit 3 bis 10 C-Atomen und R³ für lineare oder verzweigte Alkylgruppe mit 6 bis 10 C-Atomen steht, in einem kombinierten Massenanteil im Bereich von 20 bis 90 %.

## Beschreibung

Die Erfindung betrifft eine Haftklebemasse für die Verklebung von Druckplatten, ein entsprechendes Haftklebeband und die Verwendung entsprechender Haftklebemassen und Haftklebebänder zur Verbesserung der Ablösbarkeit angeklebter Druckplatten bei der Verarbeitung von Cellulosenitrat-haltiger Farbe.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar, deren Klebewirkung auf den eingesetzten Klebemassen beruht.

Für zahlreiche technischen Anwendungen sind insbesondere Haftklebebänder relevant, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Haftklebebänder erfreuen sich in zahlreichen Bereichen der Technik großer Beliebtheit, da sie regelmäßig besonders einfach einzusetzen sind und eine schnelle und unkomplizierte Verbindung mehrerer Elemente ermöglichen. Neben Anwendungsbereichen in Industrien, deren Produkte für die meisten Menschen zum Alltag gehören, beispielsweise bei der Fertigung von Fahrzeugen und elektronischen Geräten, kommen Haftklebebänder auch in Bereichen zur Anwendung, die im Alltag weniger präsent sind. Dabei stellen häufig gerade diese zumeist hochspezialisierten Anwendungen besondere Anforderungen an die physikalisch-chemischen Eigenschaften von Haftklebemassen.

Ein wichtiger Industriezweig, der besonders auf leistungsfähige Haftklebebänder angewiesen ist, ist die Druckindustrie. In der Druckindustrie sind unterschiedliche Verfahren bekannt, um Motive auf Substrate zu übertragen, wobei insbesondere dem sogenannten Flexodruckverfahren eine große Bedeutung zukommt. Im Flexodruckverfahren werden flexible Druckplatten (auch als Klischees bezeichnet) auf Druckzylinder oder Druckhülsen (letztere auch als Sleeves bezeichnet) befestigt. Diese Klischees bestehen häufig aus einer Polyethylenterephthalat-Folie (PET-Folie), auf die eine Schicht eines Fotopolymers aufgebracht ist, in denen durch selektive Belichtung das entsprechende Druckrelief eingestellt werden kann. Haftklebebänder, zumeist in der Form von doppelseitigen Klebebändern, werden im Flexodruckverfahren insbesondere dafür verwendet, um die zum Bedrucken von Substraten verwendeten Druckplatten auf den Druckzylindern bzw. Druckhülsen der verwendeten Vorrichtungen zu fixieren. Die Anforderungen der Druckindustrie erfordern es dabei, dass während des Druckvorgangs eine ausreichende Verbundfestigkeit der angeklebten Druckplatten gewährleistet werden kann, auch bei erhöhten Temperaturen von etwa 40 bis 60 °C. Gleichzeitig müssen die entsprechenden Druckplatten jedoch nach dem Drucken von den Vorrichtungen möglichst leicht und zeiteffizient entfernt werden können, ggf. sogar nach einer langen Verklebung von beispielsweise 6 Monaten, wobei das Entfernen möglichst rückstandsfrei und ohne Beschädigung der Druckplatten möglich sein muss. Dieser Vorgang des Entfernens der Druckplatten, der in der Praxis häufig manuell durch Arbeitskräfte ausgeführt wird, erfordert, dass die eingesetzten Haftklebebänder, nach dem Druckvorgag eine gute Ablösbarkeit der Druckplatten gewährleisten, sodass die eingesetzten Arbeitskräfte keinen übermäßigen Kraftaufwand aufbringen müssen, um eine Druckplatte auszuwechseln. Weitere Informationen sind beispielsweise in der DE 10 2016 213 185 A1 oder der EP 3 239 260 A1 offenbart.

Eine Besonderheit dieses Einsatzzweckes ist es dabei, dass viele der in der Druckindustrie eingesetzten Farben eine Vielzahl von chemischen Substanzen umfassen, die die Klebeigenschaften der eingesetzten Haftklebebänder beeinflussen können. Insbesondere umfassen viele Farben Cellulosenitrat (umgangssprachlich teilweise auch als Nitrocellulose bezeichnet), welches in diesen als Bindemittel fungiert.

Selbst bei einer sehr sorgfältigen Verfahrensführung sind auch die Rückseiten der zu verklebenden Druckplatten und/oder die Oberflächen der Druckzylinder entsprechender Druckvorrichtungen häufig mit entsprechenden Substanzen wie Cellulosenitrat verunreinigt. Diese Verunreinigungen werden dabei häufig nicht nur von Farbspritzern oder anderen direkten Farbkontakten verursacht, sondern sind in vielen Fällen auch eine Folge des zur Reinigung der Druckplatten verwendeten Verfahrens. Zumeist werden die Druckplatten nämlich nach dem Einsatz durch ein Reinigungsbad geführt, welches spätestens nach der ersten Reinigung auch Cellulosenitrat umfasst. Das Reinigungsbad benetzt die Druckplatten dabei zumeist vollständig, sodass Rückstände von Cellulosenitrat auf sämtlichen Seiten der Druckplatten verbleiben.

Die Anwesenheit von Cellulosenitrat auf den zu verklebenden Flächen der Druckplatten wird regelmäßig als nachteilig empfunden. Cellulosenitrat kann nämlich zwischen der Druckplatte und der eingesetzten Haftklebemasse als Haftvermittler agieren, wodurch die Klebkraft der Haftklebemassen deutlich ansteigt. In der Praxis bedeutet dies, dass mit herkömmlichen Haftklebemassen verklebte Druckplatten nach dem Einsatz häufig eine unzureichende Ablösbarkeit von den Druckzylindern aufweisen. Hierdurch wird das Entfernen der Druckplatten für die eingesetzten Arbeitskräfte deutlich anstrengender, da diese große Kräfte aufbringen müssen, um die Druckplatten zu lösen. Darüber hinaus kann auch die Zeit- und Kosteneffizienz des gesamten Druckvorgangs nachteilig beeinflusst werden, beispielsweise wenn die verwendeten Vorrichtungen zum Zwecke der Entfernung der Druckplatten länger stillstehen müssen, wenn es wegen der starken Adhäsion beim Ablösen zu Beschädigungen der Druckplatten kommt und/oder wenn sich auszutauschende Haftklebebändern von den Druckzylindern nicht ohne großen Aufwand lösen lassen, beispielsweise in Folge eines kohäsiven Versagens, welches durch die vergrößerte Adhäsion begünstigt wird.

Im Bereich der Haftklebemassen haben sich insbesondere Poly(meth)acrylate grundsätzlich als sehr gut einsetzbare Basismaterialien erwiesen. Diese polymeren Verbindungen verfügen regelmäßig über physikalisch-chemische Eigenschaften, die sie für den Einsatz in Haftklebemassen prädestinieren, beispielsweise eine hohe Beständigkeit gegenüber Licht, Witterungseinflüssen und einer Vielzahl von Chemikalien sowie auch eine hohe intrinsische Klebkraft und eine vorteilhafte Alterungsbeständigkeit. Darüber hinaus sind Poly(meth)acrylat-basierte Klebemassen regelmäßig auf einer breiten Palette von Substraten einsetzbar, insbesondere sowohl auf polaren als auch auf weniger polaren Substraten, beispielsweise auf Glas und Stahl, aber auch auf Kunststoffen, wie beispielsweise Polystyrol oder Polycarbonaten. Im technischen Gebiet der Klebetechnik besteht entsprechend ein fortgesetztes Interesse daran, die physikalisch-chemischen Eigenschaften von Poly(meth)acrylat-basierten Haftklebemassen zu verbessern, insbesondere deren klebtechnische Eigenschaften.

Vor diesem Hintergrund sind Poly(meth)acrylat-basierte Haftklebemassen grundsätzlich auch für den Einsatz in der Druckindustrie vielversprechende Haftklebemasse. Trotz der grundsätzlichen Vorteile solcher Poly(meth)acrylat-basierten Haftklebemassen wird bei diesen Systemen jedoch häufig die vorstehend beschriebene Problematik der Wechselwirkung mit Cellulosenitrat als besonders nachteilig empfunden, wodurch ihre Einsetzbarkeit reduziert wird.

Die primäre Aufgabe der vorliegenden Erfindung war es, die die vorstehend beschriebenen Nachteile des Standes der Technik zu beseitigen oder zumindest zu verringern.

Insbesondere war es die Aufgabe der vorliegenden Erfindung, eine Haftklebemasse anzugeben, welche eine hinreichende Haftklebrigkeit aufweist, um die in der Druckindustrie eingesetzten Druckplatten auf typischen Untergründen, insbesondere Stahl und Kunststoffen, während des Einsatzes sicher zu fixieren, jedoch gleichzeitig eine gute Ablösbarkeit der Druckplatten und entsprechend eine möglichst leichte Auflösbarkeit des Klebeverbundes ermöglicht. Hierbei sollte die leichte Demontierbarkeit von mit entsprechenden Haftklebemassen fixierten Druckplatten insbesondere auch dann gegeben sein, wenn die Haftklebemassen im Einsatz mit chemischen Substanzen, insbesondere Cellulosenitrat, in Kontakt gelangen.

Insoweit war es wünschenswert, dass die anzugebenden Haftklebemassen möglichst weitgehend unter Verwendung solcher Ausgangsmaterialien und Verfahren herstellbar sein sollten, die im Bereich der Klebetechnik bereits zum Einsatz kommen, um eine zeit- und kosteneffiziente Herstellung zu ermöglichen.

Es war eine ergänzende Aufgabe der vorliegenden Erfindung ein vorteilhaftes Haftklebband anzugeben.

Die Erfinder haben nunmehr gefunden, dass sich die vorstehend beschriebenen Aufgaben überraschenderweise lösen lassen, wenn in einer Haftklebemasse spezifische Poly(meth)acrylate eingesetzt werden, deren Zusammensetzung aus Monomereinheiten spezifisch festgelegt wird, wie es in den Ansprüchen definiert ist. Insoweit war es besonders überraschend, dass sich die vorstehenden Aufgaben nur beim Einsatz von bestimmten verzweigten (Meth)acrylat-Monomeren in Kombination mit einem vergleichsweise hohen Anteil an bestimmten funktionellen Monomeren erreicht werden kann, wie es nachfolgend offenbart ist.

Ohne an diese Theorie gebunden sein zu wollen gehen die Erfinder davon aus, dass sich auf diese Weise Poly(meth)acrylate erhalten lassen, deren dynamischer Tg, d.h. deren dynamische Glasübergangstemperatur, eine besonders starke Abhängigkeit von der Frequenz, bzw. Geschwindigkeit, zeigt, so dass sie beim Ablösen der Druckplatten auch bei niedrigen Geschwindigkeiten besonders schnell ins sogenannte "Rattern" kommen, wodurch die Demontage der Druckplatten und die Auflösung des Klebeverbundes begünstigt werden.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Haftklebebänder und Verwendungen ergeben sich aus den Merkmalen bevorzugter Haftklebemassen.

Insoweit nachfolgend für ein Element, beispielsweise für die Poly(meth)acrylate oder ein bestimmtes Monomer, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft eine Haftklebemasse für die Verklebung von Druckplatten, umfassend ein oder mehrere Poly(meth)acrylate in einem kombinierten Massenanteil von 50 % oder mehr, bezogen auf die Masse der Haftklebemasse,
wobei das eine oder die mehreren Poly(meth)acrylate herstellbar sind durch Polymerisation einer Monomerzusammensetzung umfassend bezogen auf die Masse der Monomerzusammensetzung:
i) ein oder mehrere erste Monomere, die ausgewählt sind aus der Gruppe bestehend aus Acrylsäure, Methacrylsäure, Dimethylacrylamid, Hydroxybutylacrylat, Hydroxypropylacrylat und Hydroxyethylacrylat in einem kombinierten Massenanteil im Bereich von 10 bis 20 %, und
ii) ein oder mehrere zweite Monomere, die ausgewählt sind aus der Gruppe bestehend aus (Meth)acrylsäureestern gemäß der Formel (I),

   CH₂=CR¹-C(O)O-CHR²R³ (I),

   wobei R¹ für ein Wasserstoffatom oder eine Methylgruppe steht, wobei entweder i) R² für ein Wasserstoffatom und R³ für eine verzweigte Alkylgruppe mit 16 bis 20 C-Atomen steht, oder ii) R² für eine lineare oder verzweigte Alkylgruppe mit 3 bis 10 C-Atomen und R³ für lineare oder verzweigte Alkylgruppe mit 6 bis 10 C-Atomen steht, in einem kombinierten Massenanteil im Bereich von 20 bis 90 %.

Die erfindungsgemäßen Haftklebemassen sind für den Einsatz in der Druckindustrie vorgesehen und entsprechend für die Verklebung von Druckplatten geeignet.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G') und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G' und G" jeweils zumindest zum Teil im Bereich von 10³ bis 10⁷ Pa liegen.

Die erfindungsgemäße Haftklebemasse umfasst Poly(meth)acrylate, die wiederum aus verschiedenen Monomeren herstellbar bzw. hergestellt sind. Diese Bestandteile werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die Monomerzusammensetzung als erstes Monomer ausschließlich Acrylsäure umfassen, was bedeuten würde, dass die Monomerzusammensetzung eine Vielzahl von Acrylsäure-Molekülen umfasst.

Im Rahmen der vorliegenden Erfindung umfasst der Ausdruck "Poly(meth)acrylate" in Übereinstimmung mit dem fachmännischen Verständnis Polyacrylate und Polymethacrylate sowie Copolymere dieser Polymere. Poly(meth)acrylate können kleinere Mengen an Monomereinheiten enthalten, die sich nicht aus (Meth)acrylaten ableiten. Unter einem "Poly(meth)acrylat" wird im Rahmen der vorliegenden Erfindung entsprechend ein (Co-)Polymer verstanden, dessen Monomerbasis zu einem Massenanteil von 70 % oder mehr, bevorzugt 90 % oder mehr, besonders bevorzugt 98 % oder mehr, aus Monomeren besteht, die ausgewählt sind aus der Gruppe bestehend aus Acrylsäure, Methacrylsäure, Acrylsäureestern und Methacrylsäureestern, bezogen auf die Masse der Monomerbasis. Bevorzugt liegt der Massenanteil von Acrylsäureester und/oder Methacrylsäureester bei 50 % oder mehr, besonders bevorzugt 70 % oder mehr. Poly(meth)acrylate sind allgemein durch radikalische Polymerisation von Acryl- und/oder Methacryl-basierten Monomeren sowie gegebenenfalls weiteren copolymerisierbaren Monomeren zugänglich.

In Übereinstimmung mit dem fachmännischen Verständnis und dem üblichen Vorgehen im Bereich der Technik ist es zielführend, polymere Verbindungen wie die Poly(meth)acrylate über das Herstellungsverfahren beziehungsweise die zur Herstellung verwendeten Ausgangsmaterialien zu definierten, da es unmöglich ist, die entsprechenden Materialien anders sinnvoll zu definieren.

Die Herstellung der Poly(meth)acrylate aus der Monomerzusammensetzung kann nach den gängigen Verfahren erfolgen, insbesondere durch konventionelle radikalische Polymerisationen oder kontrollierte radikalische Polymerisationen. Die Polymere bzw. Oligomere können durch Copolymerisation der monomeren Komponenten unter Verwendung der üblichen Polymerisationsinitiatoren sowie gegebenenfalls von Reglern hergestellt werden, wobei bei den üblichen Temperaturen beispielsweise in Substanz, in Emulsion, z.B. in Wasser oder flüssigen Kohlenwasserstoffen, oder in Lösung polymerisiert werden kann. Bevorzugt werden die Poly(meth)acrylate und/oder die Klebharze durch Polymerisation in Lösungsmitteln, besonders bevorzugt in Lösungsmitteln mit einer Siedetemperatur im Bereich von 50 bis 150 °C, besonders bevorzugt im Bereich von 60 bis 120 °C, unter Verwendung der üblichen Mengen an Polymerisationsinitiatoren, hergestellt, wobei die Polymerisationsinitiatoren der Monomerzusammensetzung im Allgemeinen in einem Anteil von etwa 0,01 bis 5 %, insbesondere von 0,1 bis 2 % zugesetzt werden, bezogen auf die Masse der Monomerzusammensetzung.

Geeignete Polymerisationsinitiatoren sind beispielsweise Radikalquellen wie Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat oder Benzpinacol. Besonders bevorzugt wird als radikalischer Initiator 2,2'-Azobis(2-methylbutyronitril) oder 2,2'-Azobis(2-methylpropionitril) verwendet. Als Lösungsmittel kommen insbesondere Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine mit einer Siedetemperatur im Bereich von 60 bis 120 °C in Frage. Insbesondere können Ketone, wie beispielsweise Aceton, Methylethylketon und Methylisobutylketon, und Ester, wie beispielsweise Essigsäureethylester, sowie Mischungen dieser Lösungsmittel eingesetzt werden.

Die erfindungsgemäß einzusetzenden Poly(meth)acrylate sind herstellbar bzw. hergestellt durch Polymerisation einer spezifischen Monomerzusammensetzung, die bestimmte Monomere mit spezifischen funktionellen Gruppen, d.h. die ersten Monomere, und bestimmte verzweigte Monomere, d.h. die zweiten Monomere, sowie bevorzugt einen Maximalgehalt an bestimmten Borneol-Derivaten umfasst.

Insoweit war für die Erfinder zunächst besonders überraschend, dass die Lösung der vorstehenden Aufgaben derart sensibel von den ersten Monomeren und deren Massenanteil abhängt, die nämlich lediglich in einem relativ engen Massenanteilsbereich eingesetzt werden können.

Die ersten Monomere sind dabei insbesondere auch für eine etwaige nachfolgende Vernetzung der Poly(meth)acrylate relevant, die wie nachfolgen beschrieben in vielen Fällen bevorzugt ist. Hierbei nutzen die eigesetzten Carbonsäure-haltigen Monomere bzw. die Hydroxyalkylacrylate ebenso wie das Dimethylacrylamid jeweils zumeist eine unterschiedliche Vernetzungschemie, wie es nachfolgend weiter erläutert wird. Dabei ist es besonders bevorzugt, wenn als erste Monomere überwiegend, besonders bevorzugt im Wesentlichen vollständig, entweder die vorstehend genannten Carbonsäuren oder die vorstehend genannten Hydroxyalkylacrylate eingesetzt werden, wobei der Anteil der mehrheitlich eingesetzten Komponente bevorzugt um einen Faktor von 50 oder mehr, bevorzugt 100 oder mehr, größer ist, als der Massenanteil der anderen Komponente.

Nach Erkenntnis der Erfinder kommt dem Dimethylacrylamid unter den ersten Monomeren insoweit eine besondere Bedeutung zu, dass es besonders gut mit den Carbonsäuren oder den Hydroxyalkylacrylaten gemischt werden kann und ausgezeichnet dafür geeignet ist, den benötigten kombinierten Massenanteil der ersten Monomere einzustellen. Mit Blick auf eine vorteilhafte Verarbeitung, insbesondere eine effiziente Vernetzung der hergestellten Poly(meth)acrylate, ist es jedoch bevorzugt, wenn die Monomerzusammensetzung neben Dimethylalcrylamid zumindest ein weiteres erstes Monomer umfasst, bevorzugt in einem Massenanteil von 0,1 % oder mehr, besonders bevorzugt von 1 % oder mehr, bezogen auf die Masse der Monomerzusammensetzung, um bei der Vernetzung der Poly(meth)acrylate eine höhere Flexibilität zu ermöglichen.

Die verzweigten zweiten Monomere sind nach Einschätzung der Erfinder für die hohe Toleranz der resultierenden erfindungsgemäßen Haftklebemassen gegen den Einfluss von Cellulosenitrat besonders relevant. Basierend auf den umfassenden Versuchen der Erfinder konnte insoweit eine zuverlässige Beschreibung der Struktur von solchen verzweigten Monomeren vorgenommen werden, die in entsprechenden vorteilhaften Poly(meth)acrylaten resultieren. Wie vorstehend beschrieben, lassen sich die zweiten Monomere grundsätzlich durch die folgende Konstitutionsformel beschreiben:

CH₂=CR¹-C(O)O-CHR²R³.

Der Rest R¹ definiert hierbei zunächst lediglich, ob es sich bei dem jeweiligen zweiten Monomer um ein Acrylat oder Methacrylat handelt, wobei Acrylate besonders bevorzugt sind. Ausgehend hiervon gibt es, wie vorstehend beschrieben, zwei verschiedene Alternativen für geeignete zweite Monomere. Wenn R², d. h. einer der Reste in dem über die Ester-Bindung angebundenen Teil der zweiten Monomere, ein Wasserstoffatom ist, muss der andere Rest R³ eine verzweigte Alkylgruppe mit zumindest 16 C-Atomen sein, so dass der über die Ester-Bindung angebundenen Teil der zweiten Monomere insgesamt zumindest 17 C-Atome umfasst. Alternativ kann, sofern R² selbst eine lineare oder verzweigte Alkylgruppe mit zumindest 3 C-Atomen ist, R³ eine lineare oder verzweigte Alkylgruppe mit 6 bis 10 C-Atomen sein. Durch den Einsatz dieser verzweigten Monomere mit relativ langen Kettenlängen lassen sich in Kombination mit den ersten Monomeren überraschenderweise Poly(meth)acrylat-basierte Haftklebemassen erhalten, welche eine hohe Resistenz gegen Cellulosenitrat aufweisen und beim Einsatz zur Befestigung von Druckplatte nicht nur die im Betrieb notwendige Haftfestigkeit gewährleisten, sondern anschließend selbst nach langem Betrieb eine hinreichende Ablösbarkeit der Druckplatten ermöglichen.

Abgesehen von den erfindungsgemäß einzusetzenden ersten und zweiten Monomeren haben die Experimente der Erfinder gezeigt, dass die erfindungsgemäß einzusetzenden Poly(meth)acrylate hinsichtlich der weiteren Monomere in der Monomerzusammensetzung für die weit überwiegende Zahl, bzw. für nahezu alle, der möglichen weiteren Monomere sehr flexibel sind. Beachtlich und sehr überraschend ist jedoch, dass es eine markante Ausnahme von diesem Befund gibt. Überraschenderweise und für die Erfinder nicht erklärbar, verschlechtert der Zusatz von (Meth)acrylsäureestern von Borneol bzw. Isoborneol, wie beispielsweise Isobornylacrylat, die Beständigkeit der erfindungsgemäßen Haftklebemassen gegen den Einfluss von Cellulosenitrat, zumindest wenn diese Monomere in einem zu hohen Massenanteil vorliegen, wobei die Schwelle ausgehend von den Experimenten der Erfinder bei einem Massenanteil von 10 % liegt. In einer Ausführungsform umfasst daher die Monomerzusammensetzung zur Herstellung des einen oder der mehreren Poly(meth)acrylate
iii) einen kombinierten Massenanteil von höchstens 10 % an dritten Monomeren, die ausgewählt sind aus der Gruppe bestehend aus (Meth)acrylsäureestern von Borneol oder Isoborneol.

Ohne an diese Theorie gebunden sein zu wollen, gehen die Erfinder davon aus, dass es die sehr spezifische Struktur des Borneols bzw. Isoborneols ist, die eine unerwartete Wechselwirkung mit dem Cellulosenitrat eröffnet, die bei Einsatz erfindungsgemäßer Haftklebemassen in der Druckindustrie zu einer unerwartet hohen Steigerung der Klebkraft führt, durch die die Ablösbarkeit der Druckplatten sehr nachteilig beeinflusst werden kann. Aus dem Umstand, dass gemäß von den durchgeführten Experimenten zumindest kleinere Massenanteile an solchen Monomeren die vorteilhaften Eigenschaften erfindungsgemäßer Haftklebemassen nicht bzw. nur kaum nachteilig beeinflussen, schlussfolgern die Erfinder, dass der nachteilige Effekt der Anwesenheit dieser dritten Monomere im Gleichgewicht mit den grundsätzlichen Vorteilen erfindungsgemäßer Haftklebemassen steht, sodass letztere den nachteiligen Einfluss der dritten Monomere bis zu einem gewissen Massenanteil überwiegen können.

Nach Einschätzung der Erfinder zeigen sich die Vorteile erfindungsgemäßer Haftklebemassen bereits dann, wenn diese zu großen Teilen bzw. überwiegend aus den vorstehend definierten Poly(meth)acrylaten bestehen, wie es vorstehend definiert ist. Hierbei kann es als Vorteil gesehen werden, dass die physikalisch-chemischen Eigenschaften entsprechender erfindungsgemäßer Haftklebemassen durch weitere Bestandteile, beispielsweise durch Klebharze und andere Additive, gezielt an die jeweiligen Anforderungen angepasst werden können, ohne die Beständigkeit gegenüber Cellulosenitrat allzu nachteilig zu beeinflussen. Bevorzugt ist mit Blick auf eine maximale Widerstandsfähigkeit gegen den Einfluss von Cellulosenitrat jedoch eine erfindungsgemäße Haftklebemasse, wobei der kombinierte Massenanteil des einen oder der mehreren Poly(meth)acrylate 60 % oder mehr, bevorzugt 70 % oder mehr, besonders bevorzugt 80 % oder mehr, ganz besonders bevorzugt 90 % oder mehr, beträgt, bezogen auf die Masse der Haftklebemasse.

Die Erfinder haben erkannt, dass für eine optimale Einsetzbarkeit in der Druckindustrie und zur besonders vorteilhaften Lösung des Zielkonflikts aus einer hinreichenden Haftklebrigkeit im Einsatz und einer ausreichend guten Ablösbarkeit beim Auswechseln der Druckplatten vergleichweise hohe Molekulargewichte im Poly(meth)acrylat eingestellt werden sollten. Bevorzugt ist dabei eine erfindungsgemäße Haftklebemasse, wobei das eine oder die mehreren Poly(meth)acrylate ein gewichtsmittleres Molekulargewicht M_{w} von 300000 g/mol oder mehr, bevorzugt von 400000 g/mol oder mehr, besonders bevorzugt von 500000 g/mol oder mehr, ganz besonders bevorzugt von 750000 g/mol oder mehr, aufweist.

Die Bestimmung des gewichtsmittleren Molekulargewichts erfolgt dabei mittels Gelpermeationschromatographie (GPC) an 100 mL klarfiltrierter Probe (Probenkonzentration 0,5 g/L). Als Eluent wird Tetrahydrofuran mit 0,1 Vol.-% Trifluoressigsäure eingesetzt. Die Messung erfolgt bei 25 °C. Als Vorsäule wird eine Säule vom Typ PSS-SDV, 10 µm, ID 8,0 mm x 50 mm verwendet. Zur Auftrennung werden Säulen des Typs PSS-SDV, 5 µm, 10³ Ä (SN9090201) sowie 5 µm, 10² Ä (SN9090200) mit jeweils ID 8,0 mm x 300 mm eingesetzt (Detektion mittels Differentialrefraktometer PSS-SECurity 1260 RID). Die Durchflussmenge beträgt 0,5 mL pro Minute. Die Kalibrierung erfolgt gegen PMMA-Standards (Polymethylmethacrylat-Kalibrierung).

Insoweit ist es nach Einschätzung der Erfinder besonders sinnvoll, die Poly(meth)acrylate unter Einsatz von an sich bekannten Verfahren und üblichen Vernetzern zu vernetzen. Hierbei ist es vorteilhaft, wenn die Auswahl der Vernetzer zielgerichtet auf die erfindungsgemäß einzusetzenden Poly(meth)acrylate bzw. insbesondere die ersten Monomere, abgestimmt wird. Bevorzugt ist entsprechend eine erfindungsgemäße Haftklebemasse, wobei das eine oder die mehreren Poly(meth)acrylate herstellbar sind durch eine Polymerisation, die zusätzlich eine Vernetzung umfasst, bevorzugt mit einem chemischen Vernetzer und/oder einem physikalischen Vernetzer, wobei der chemischen Vernetzer bevorzugt ausgewählt ist aus der Gruppe bestehend aus Isocanaten und Epoxiden, und besonders bevorzugt in einem Massenanteil im Bereich von 0,05 bis 2,5 %, ganz besonders bevorzugt im Bereich von 0,1 bis 0,2 %, eingesetzt wird, wobei der physikalische Vernetzer besonders bevorzugt ausgewählt ist aus der Gruppe bestehend aus Aluminiumacetylacetonat und Eisenacetylacetonat, und besonders bevorzugt in einem Massenanteil im Bereich von 0,1 bis 2 %, ganz besonders bevorzugt im Bereich von 0,3 bis 1,0 %, eingesetzt wird.

Hydroxyfunktionelle erste Monomere werden bevorzugt über Isocyanate, besonders Diisocyanate, beispielsweise Poly-(hexamethylendiisocyanat), vernetzt. Erste Monomere mit Carbonsäurefunktionalitäten werden bevorzugt über Epoxidverbindungen, beispielsweise 3,4-Epoxycyclohexylmethyl 3,4-epoxycyclohexanecarboxylat oder N,N,N',N'-Tetrakis(2,3-epoxypropyl)-m-xylen-a,a'-diamin, vernetzt.

Für die Erfinder war es besonders überraschend, dass sich die vorstehend beschriebenen Aufgaben mit Poly(meth)acrylaten lösen lassen, die hinsichtlich der Monomerzusammensetzung, insbesondere der Menge an ersten und dritten Monomeren, in einem derart engen Zusammensetzungskorridor liegen. Insoweit ist es den Erfindern jedoch gelungen, aus den Experimenten besonders vorteilhafte Bereiche abzuleiten, mit denen sich auch bei starker Kontamination mit Cellulosenitrat zuverlässig eine gute Ablösbarkeit realisieren lässt. Bevorzugt ist nämlich eine erfindungsgemäße Haftklebemasse, wobei die Monomerzusammensetzung bezogen auf die Masse der Monomerzusammensetzung:
i1) das eine oder die mehreren ersten Monomere, in einem kombinierten Massenanteil im Bereich von 10 bis 15 %, bevorzugt im Bereich von 10 bis 13 %, umfasst, und/oder
ii1) das eine oder die mehreren zweiten Monomere, in einem kombinierten Massenanteil im Bereich von 40 bis 90 %, bevorzugt im Bereich von 60 bis 90 %, umfasst, und/oder
iii1) einen kombinierten Massenanteil von höchstens 8 %, bevorzugt höchstens 5 %, besonders bevorzugt höchstens 2 %, ganz besonders bevorzugt von höchstens 1 %, an den dritten Monomeren umfasst, wobei die Monomerzusammensetzung bevorzugt im Wesentlichen frei von dritten Monomeren ist. Der Fachmann versteht insoweit, dass bevorzugt für zwei oder mehr, besonders bevorzugt sämtliche, der Monomere die vorstehend angegebenen Bereiche bzw. bevorzugten Bereiche, eingestellt werden können, um besonders leistungsfähige erfindungsgemäße Haftklebemassen zu erhalten.

Darüber hinaus ist es den Erfindern gelungen, für die ersten und zweiten Monomere besonders geeignete Verbindungen zu identifizieren. Wie vorstehend erläutert ist es dabei insbesondere bevorzugt, das die ersten Monomere zumindest überwiegend aus den entsprechenden Carbonsäuren oder den Hydroxyalkylacrylaten, jeweils gegebenenfalls in Kombination mit Dimethylacrylamid, bestehen. Bevorzugt ist somit eine erfindungsgemäße Haftklebemasse, wobei in der Monomerzusammensetzung:
i2) das eine oder die mehreren ersten Monomere ausgewählt sind aus der Gruppe bestehend aus Acrylsäure, Methacrylsäure und Dimethylacrylamid, bevorzugt Acrylsäure und Methacrylsäure, besonders bevorzugt Acrylsäure, oder das eine oder die mehreren ersten Monomere ausgewählt sind aus der Gruppe bestehend aus Dimethylacrylamid, Hydroxybutylacrylat, Hydroxypropylacrylat und Hydroxyethylacrylat, bevorzugt Hydroxybutylacrylat, Hydroxypropylacrylat und Hydroxyethylacrylat. Bevorzugt ist auch eine erfindungsgemäße Haftklebemasse, wobei der kombinierte Massenanteil von Acrylsäure und Methacrylsäure oder der kombinierte Massenanteil von Hydroxybutylacrylat, Hydroxypropylacrylat und Hydroxyethylacrylat, bevorzugt der kombinierte Massenanteil von Acrylsäure und Methacrylsäure, bezogen auf die kombinierte Masse der ersten Monomere, 80 % oder mehr, bevorzugt 90 % oder mehr, besonders bevorzugt 98 % oder mehr, beträgt.

Hinsichtlich der zweiten Monomere sind Acrylsäureester nach Einschätzung der Erfinder inhärent bevorzugt, wobei die Erfinder zweite Monomere identifizieren konnten, die zur Lösung der vorstehend beschriebenen Aufgaben ganz besonders geeignet sind und die zudem über ausgezeichnete Verarbeitungseigenschaften verfügen, wobei sie in den erfindungsgemäß einzusetzenden Poly(meth)acrylaten zudem zu ausgezeichneten Hafteigenschaften beitragen. Bevorzugt ist nämlich eine erfindungsgemäße Haftklebemasse, wobei in der Monomerzusammensetzung:
ii2) das eine oder die mehreren zweiten Monomere ausgewählt sind aus der Gruppe bestehend aus (Meth)acrylsäureestern, bevorzugt Acrylsäureestern, gemäß der Formel (I),

CH₂=CR¹-C(O)O-CHR²R³ (I),

wobei R¹ für ein Wasserstoffatom oder eine Methylgruppe, bevorzugt ein Wasserstoffatom, steht, wobei entweder i) R² für ein Wasserstoffatom und R³ für eine verzweigte Alkylgruppe mit 16 bis 19 C-Atomen, bevorzugt mit 16 bis 18 C-Atomen, steht, oder ii) R² für eine lineare oder verzweigte, bevorzugt lineare, Alkylgruppe mit 3 bis 8 C-Atomen, bevorzugt mit 3 bis 5 C-Atomen, und R³ für lineare oder verzweigte, bevorzugt lineare, Alkylgruppe mit 4 bis 9 C-Atomen, bevorzugt mit 5 bis 8 C-Atomen, steht. Besonders bevorzugt ist zudem eine erfindungsgemäße Haftklebemasse, wobei in der Monomerzusammensetzung:
ii3) das eine oder die mehreren zweiten Monomere ausgewählt sind aus der Gruppe bestehend aus i-Heptadecyl(meth)acrylat und Propylheptyl(meth)acrylat, bevorzugt i-Heptadecylacrylat und Propylheptylacrylat.

Als besonders vorteilhafte Ausgestaltung für den Einsatz von zweiten Monomeren hat sich nach Einschätzung der Erfinder erwiesen, wenn jeweils zumindest ein Vertreter der zwei vorstehend definierten Alternativen eingesetzt wird, beispielsweise i-Heptadecylacrylat in Kombination mit Propylheptylacrylat. Mit solchen Mischungen an zweiten Monomeren lassen sich in erfindungsgemäßen Haftklebemassen die physikalisch-chemischen Eigenschaften in einer besonders breiten Spanne einstellen, ohne die hohe Resistenz gegen Cellulosenitrat nachteilig zu beeinflussen. Bevorzugt ist entsprechend eine erfindungsgemäße Haftklebemasse, wobei die Monomerzusammensetzung ein oder mehrere zweite Monomere umfasst, in denen R² für ein Wasserstoffatom und R³ für eine verzweigte Alkylgruppe mit 16 bis 20 C-Atomen steht, bevorzugt in einem in einem kombinierten Massenanteil im Bereich von 20 bis 70 %, besonders bevorzugt im Bereich von 25 bis 65 %, und ein oder mehrere zweite Monomere umfasst, in denen R² für eine lineare oder verzweigte Alkylgruppe mit 3 bis 10 C-Atomen und R³ für lineare oder verzweigte Alkylgruppe mit 6 bis 10 C-Atomen steht, bevorzugt in einem kombinierten Massenanteil im Bereich von 20 bis 70 %, besonders bevorzugt im Bereich von 25 bis 65 %.

Auch wenn die vorstehend angegebenen Massenanteile für die ersten und zweiten Monomere nach Einschätzung der Erfinder ausreichend sind, um eine deutlich verbesserte Resistenz gegen den Einfluss von Cellulosenitrat zu erreichen und in entsprechenden Poly(meth)acrylaten somit auch weitere Monomere vorgesehen werden können, die der Einstellung der physikalisch-chemischen Eigenschaften dienen, ist es nach Einschätzung der Erfinder zur Maximierung der Resistenz gegen den Einfluss der Cellulosenitrat vorteilhaft, wenn die Monomerzusammensetzung überwiegend bzw. weitgehend aus den ersten und zweiten Monomeren besteht, wobei im Lichte der vorstehenden Offenbarung insbesondere die Abwesenheit von Methacrylsäureestern von Borneol oder Isoborneol bevorzugt ist. Bevorzugt ist folglich eine erfindungsgemäße Haftklebemasse, wobei die Monomerzusammensetzung bezogen auf die Masse der Monomerzusammensetzung erste Monomere und zweite Monomere in einem kombinierten Massenanteil von 50 % oder mehr, bevorzugt 60 % oder mehr, besonders bevorzugt 70 % oder mehr, ganz besonders bevorzugt 80 % oder mehr, insbesondere bevorzugt 90 % oder mehr, umfasst.

Nach Einschätzung der Erfinder sind die Poly(meth)acrylate, wie vorstehend erläutert abgesehen von den dritten Monomeren, hinsichtlich der weiteren Monomere relativ flexibel. Insoweit ist es den Erfindern jedoch gelungen, eine spezifische Klasse von Monomeren zu identifizieren, die mit den ersten und zweiten Monomeren anscheinend besonders gut verträglich sind, da ihre Gegenwart die hohe Resistenz der Haftklebemassen gegen Cellulosenitrat auch bei größeren Massenanteilen nicht nachteilig beeinflusst. Da die entsprechenden Monomere gleichzeitig vorteilhafte Verarbeitungseigenschaften aufweisen und die resultierenden physikalisch-chemischen Eigenschaften der Poly(meth)acrylate durch ihren Einsatz spezifisch auf die jeweiligen Anwendungsfelder abgestimmt werden können, ist es bevorzugt, diese sogenannten vierten Monomere als weitere Bestandteile einzusetzen. Bevorzugt ist demnach eine erfindungsgemäße Haftklebemasse, wobei die Monomerzusammensetzung umfasst:
iv) ein oder mehrere vierte Monomere, die ausgewählt sind aus der Gruppe bestehend aus (Meth)acrylsäureestern, bevorzugt Acrylsäureestern, gemäß der Formel (II),

CH₂=CR¹-C(O)O-R⁴ (II),

wobei R¹ für ein Wasserstoffatom oder eine Methylgruppe, bevorzugt ein Wasserstoffatom, steht, wobei R⁴ für eine verzweigte Alkylgruppe mit 3 bis 16 C-Atomen, bevorzugt mit 3 bis 12 C-Atomen, oder einen Phenoxyalkylrest mit 8 bis 16 C-Atomen, bevorzugt mit 8 bis 12 C-Atomen, besonders bevorzugt für eine verzweigte Alkylgruppe mit 3 bis 10 C-Atomen, steht, bevorzugt in einem kombinierten Massenanteil im Bereich von 10 bis 65 %, besonders bevorzugt im Bereich von 30 bis 60 %, ganz besonders bevorzugt im Bereich von 40 bis 50 %, bezogen auf die Masse der Monomerzusammensetzung.

Aus den vorstehenden Ausführungen folgt auch, dass die Monomerzusammensetzung in ganz besonders bevorzugten Fällen weit überwiegend und vorzugsweise im Wesentlichen vollständig aus ersten, zweiten und vierten Monomeren besteht. Bevorzugt ist entsprechend eine erfindungsgemäße Haftklebemasse, wobei die Monomerzusammensetzung bezogen auf die Masse der Monomerzusammensetzung erste Monomere, zweite Monomere und vierte Monomere in einem kombinierten Massenanteil von 80 % oder mehr, bevorzugt 90 % oder mehr, besonders bevorzugt 95 % oder mehr, ganz besonders bevorzugt 98 % oder mehr, insbesondere bevorzugt 99 % oder mehr, umfasst.

Wie vorstehend erläutert, ist der negative Einfluss der spezifischen dritten Monomere auf die Widerstandsfähigkeit erfindungsgemäßer Haftklebemassen gegen Cellulosenitrat überraschend. Mit Blick auf diesen lediglich phänomenologisch zu beschreibenden Effekt schlagen die Erfinder vor, dass es für Anwendungen im Druckbereich wohl vorteilhaft sein dürfte, wenn auch der Massenanteil von solchen Monomeren begrenzt wird, die mit den dritten Monomeren gewissen strukturelle Ähnlichkeiten aufweisen. Diese fünften Monomere, die entsprechend die dritten Monomere umfassen, lassen sich nach Einschätzung der Erfinder wohl am besten als aliphatische Monomere beschreiben, die über einen bi- oder polycyclischen Rest verfügen, wie es beispielsweise auch im i-Bornylacrylat der Fall ist. Bevorzugt ist unter dieser Annahme eine erfindungsgemäße Haftklebemasse, wobei die Monomerzusammensetzung bezogen auf die Masse der Monomerzusammensetzung umfasst:
v) einen kombinierten Massenanteil von höchstens 10 %, bevorzugt höchstens 5 %, besonders bevorzugt höchstens 1 %, an fünften Monomeren, die ausgewählt sind aus der Gruppe bestehend aus (Meth)acrylsäureestern mit einem aliphatischen, bi- oder polycyclischen Rest.

Im Rahmen der vorliegenden Erfindung haben die Erfinder erkannt, dass sich die Vorteile erfindungsgemäßer Haftklebemassen insbesondere durch den Einsatz von spezifischen verzweigten Monomeren realisieren lassen. Vor diesem Hintergrund erscheint es für eine optimale Widerstandsfähigkeit gegen Cellulosenitrat zielführend, den Anteil an Monomeren mit linearen Resten, insbesondere vergleichsweise kurzen linearen Resten, zu begrenzen. Bevorzugt ist demgemäß eine erfindungsgemäße Haftklebemasse, wobei die Monomerzusammensetzung bezogen auf die Masse der Monomerzusammensetzung umfasst:
vi) einen kombinierten Massenanteil von höchstens 20 %, bevorzugt höchstens 10 %, besonders bevorzugt höchstens 5 %, ganz besonders bevorzugt höchstens 1 %, an sechsten Monomeren, die ausgewählt sind aus der Gruppe bestehend aus (Meth)acrylsäureestern, bevorzugt Methacrylsäureestern, gemäß der Formel (II),

CH₂=CR¹-C(O)O-R⁵ (II),

wobei R¹ für ein Wasserstoffatom oder eine Methylgruppe, bevorzugt eine Methylgruppe, steht, wobei R⁵ für eine lineare Alkylgruppe mit 3 bis 30 C-Atomen, steht.

Wie vorstehend erläutert, können in der Monomerzusammensetzung grundsätzlich eine große Vielzahl an möglichen Monomeren eingesetzt werden, beispielsweise auch ethylenisch ungesättigte Monomere, bei denen es sich nicht um (Meth)acrylate handelt. Insoweit ist es nach Einschätzung der Erfinder jedoch besonders vorteilhaft, wenn auch als weitere Monomere (Meth)acrylsäureester eingesetzt werden. Bevorzugt ist somit eine erfindungsgemäße Haftklebemasse, wobei die Monomerzusammensetzung bezogen auf die Masse der Monomerzusammensetzung umfasst:
vii) ein oder mehrere siebte Monomeren, die ausgewählt sind aus der Gruppe bestehend aus sonstigen (Meth)acrylsäureestern, welche sich von den ersten, zweiten, dritten, vierten, fünften und sechsten Monomeren unterscheiden, bevorzugt in einem kombinierten Massenanteil von bis zu 100 % abzüglich des kombinierten Massenanteils der ersten, zweiten, dritten, vierten, fünften und sechsten Monomere.

Bevorzugt enthält die erfindungsgemäße Haftklebemasse zusätzlich mindestens ein Klebharz, wobei das Klebharz bevorzugt ausgewählt ist aus der Gruppe bestehend aus (Meth)acrylatharzen, Pinen- und Indenharzen, Kolophonium und Kolophoniumderivaten wie Kolophoniumestern, Polyterpenharzen, Terpenphenolharzen, Alkylphenolharzen und aliphatischen, aromatischen und aliphatisch-aromatischen Kohlenwasserstoffharzen. Besonders bevorzugt beträgt der Massenanteil der Klebharze in der Haftklebemasse 30 % oder weniger, bevorzugt 20 % oder weniger, bezogen auf die Masse der Haftklebemasse.

Bevorzugt umfasst die erfindungsgemäße Haftklebemasse zusätzlich oder alternativ mindestens einen Weichmacher, wobei der Weichmacher besonders bevorzugt ausgewählt ist aus der Gruppe bestehend aus (Meth)acrylat-Oligomeren, Phthalaten, Kohlenwasserstoff-Ölen, Cyclohexandicarbonsäureestern, Benzoesäureestern, wasserlöslichen Weichmachern, Weichharzen, Phosphaten und Polyphosphaten, besonders bevorzugt Phthalaten, Cyclohexandicarbonsäureestern und Benzoesäureestern, ganz besonders bevorzugt Benzoesäureestern. Bevorzugt umfasst die erfindungsgemäße Haftklebemasse Weichmacher in einem Massenanteil von 30 % oder weniger, bevorzugt 20 % oder weniger, besonders bevorzugt 15 % oder weniger. Zur weiteren Optimierung der physikalisch-chemischen Eigenschaften der erfindungsgemäßen Haftklebemasse kann diese zudem weitere geläufige Additive wie Füllstoffe, beispielsweise elektrisch leitfähige Füllmaterialien, thermisch leitfähige Füllmaterialien oder Flammschutzmittel, beispielweise Ammoniumpolyphosphat und dessen Derivate, enthalten.

Erfindungsgemäße Haftklebemassen können beispielsweise direkt als Klebemassen eingesetzt werden, wobei sie je nach Applikationsmethode beispielsweise auch in Form von Bändern bereitgestellt werden können. Mit Blick auf möglichst günstige Handhabungseigenschaften werden besonders vorteilhafte Resultate jedoch regelmäßig dann erzielt, wenn erfindungsgemäße Haftklebemassen als Klebeschicht eines ein- oder doppelseitigen Haftklebebandes eingesetzt werden, welches zudem eine Trägerschicht umfasst. Insbesondere für die Befestigung von Druckplatten sind dabei doppelseitige Haftklebebänder bevorzugt, die auf beiden Seiten eine erfindungsgemäße Haftklebemasse einsetzen. Die Erfindung betrifft somit auch ein Haftklebeband, insbesondere doppelseitiges Haftklebeband, umfassend eine Trägerschicht und als Haftklebemasse eine erfindungsgemäße Haftklebemasse.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Materialien für die Trägerschicht sind beispielsweise Gewebe, Gelege und Kunststofffolien, zum Beispiel PET-Folien und Polyolefin-Folien. Die Trägerschicht kann jedoch auch selbst haftklebrig sein. Das erfindungsgemäße Haftklebeband kann in einer bevorzugten Ausführungsform ein doppelseitiges Haftklebeband sein, dessen Trägerschicht auf beiden Seiten mit einer erfindungsgemäßen Haftklebemasse versehen ist. In erfindungsgemäßen Haftklebebändern können die Klebeschichten mit einem sogenannten Releaseliner abgedeckt sein, um ein problemloses Abwickeln zu ermöglichen und die Haftklebemasse vor Verschmutzung zu schützen. Solche Releaseliner bestehen üblicherweise aus einer ein- oder beidseitig silikonisierten Kunststofffolie (z.B. PET oder PP) oder einem silikonisierten Papierträger.

Offenbart wird ausgehend von dem erfindungsgemäßen Haftklebeband zudem die Verwendung einer erfindungsgemäßen Haftklebemasse oder eines erfindungsgemäßen Haftklebebandes, insbesondere doppelseitigen Haftklebebandes, zur Befestigung von Druckplatten, insbesondere flexiblen Druckplatten, auf einem Druckzylinder oder einer Druckhülse, zur Verbesserung der Ablösbarkeit der Druckplatten bei der Verarbeitung von Cellulosenitrat-haltiger Farbe.

Nachfolgend werden bevorzugte Ausführungsformen der Erfindung unter Bezugnahme auf Experimente weiter erläutert und beschrieben.

### 1. Herstellung der Poly(meth)acrylate:

**Tabelle 1 - Zusammensetzung der Poly(meth)acrylate - Teil 1 Angaben in Massenanteilen in %**

| | AS | BA | EHA | iC17 | MNA | PHA | PEA | iBA | iBOA | iSTA | LA |
|---|---|---|---|---|---|---|---|---|---|---|---|
| V1 | 8 | | | 92 | | | | | | | |
| V2 | 8 | | | 68 | | | | 24 | | | |
| V3 | 3 | | | 75 | | | 12 | | 10 | | |
| V4 | 12 | | | 64 | | | 12 | | 12 | | |
| V5 | 12 | | | 65 | | | | | 24 | | |
| V6 | 10 | | | | 90 | | | | | | |
| V7 | 8 | | | 49 | 43 | | | | | | |
| V8 | 9 | | | 45,5 | 45,5 | | | | | | |
| V9 | 8 | | | | 46 | 46 | | | | | |
| V10 | 12 | 73 | | | | | 15 | | | | |
| V11 | 12 | | | | | | | 28 | | | 60 |
| V12 | 12 | 28 | | | | | | 60 | | | |
| V13 | 12 | | 60 | | | | | 28 | | | |
| V14 | 12 | | 88 | | | | | | | | |
| V15 | 12 | | | | 60 | | | 28 | | | |
| V16 | 12 | | | | | 24 | | | | 64 | |

**Tabelle 2 - Zusammensetzung der Poly(meth)acrylate - Teil 2 Angaben in Massenanteilen in %**

| | AS | iC17 | MNA | PHA | PEA | iBA | iBOA | STA | LA |
|---|---|---|---|---|---|---|---|---|---|
| E1 | 10 | 90 | | | | | | | |
| E2 | 12 | 88 | | | | | | | |
| E3 | 10 | 66 | | | | 24 | | | |
| E4 | 12 | 64 | | | | 24 | | | |
| E5 | 12 | 64 | | | 24 | | | | |
| E6 | 10 | | | 90 | | | | | |
| E7 | 10 | 65 | | 25 | | | | | |
| E8 | 10 | 45 | | 45 | | | | | |
| E9 | 10 | 25 | | 65 | | | | | |
| E10 | 10 | 45 | 45 | | | | | | |
| E11 | 10 | 25 | 65 | | | | | | |
| E12 | 10 | 42,5 | 42,5 | | | | | | 5 |
| E13 | 10 | 42,5 | 42,5 | | | | | 5 | |
| E14 | 10 | 42,5 | 42,5 | | | | 5 | | |
| E15 | 10 | | 45 | 45 | | | | | |

**Tabelle 3 - Eingesetzte Monomere**

| Abkürzung | Monomer |
|---|---|
| AS | Acrylsäure |
| BA | n-Butylacrylat |
| EHA | Ethylhexylcrylat |
| iC17 | i-Heptadecylacrylat |
| MNA | Methylnonylacrylat |
| PHA | Propylheptylacrylat |
| PEA | Phenoxyethylacrylat |
| iBA | i-Butylacrylat |
| iBOA | i-Bornylacrylat |
| iSTA | i-Stearylacrylat |
| STA | n-Stearylacrylat |
| LA | Laurylacrylat |

Ein für radikalische Polymerisationen konventioneller Reaktor wurde zur Herstellung der in den Tabellen 1 und 2 aufgeführten Poly(meth)acrylate V1 bis V16 und E1 bis E15 jeweils mit 100 kg der angegebenen Monomere in den angegebenen Massenanteilen und 72,4 kg eines Aceton/Benzin-Gemischs (50:50) befüllt.

Nach 45-minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 70 °C erwärmt und die Reaktion konstant bei dieser Außentemperatur durchgeführt. Nach 1 h wurden erneut 50 g 2,2'-Azobis(2-methylbutyronitril) zugegeben. Jeweils nach 2, 3 und 4 h wurde mit 15 kg Aceton/Benzin-Gemisch (50:50) verdünnt.

Nach 5,5 h sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Es wurde jeweils nahezu quantitative Umsätze erreicht.

### 2. Herstellung Haftklebebänder:

Die Poly(meth)acrylate wurde jeweils mit 0,05 Gew.-%, bezogen auf das Poly(meth)acrylat, des Vernetzers N,N,N',N'-Tetrakis(2,3-epoxypropyl)-m-xylen-a,a'-diamin (Handelsname Erisys GA 240) abgemischt, um das Poly(meth)acrylat zu vernetzen. Anschließend wurde die Mischung mit Aceton auf einen Feststoffgehalt von 30 Gew.-% verdünnt und dann aus Lösung auf ein beidseitig silikonisiertes Abdeckmaterial beschichtet. Nach einer Trocknung von 15 Minuten bei 120 °C beträgt das Masseauftragsgewicht 35 g/m².

Zur Herstellung beidseitiger Haftklebebänder wird das beschichtete Abdeckmaterial masseseitig mit einer mittels Trichloressigsäure beidseitig geätzten 23 µm dicken PET-Folie kaschiert. Anschließend wird über einen Transferträger eine handelsübliche Acrylatklebemasse mit einem Masseauftrag von 20 g/m² oder einer Klebmasse ähnlicher Eigenschaften auf die unbeschichtete Seite der geätzten PET-Folie des Verbundes laminiert und ein PE-EVA-Schaum mit einer Dicke von 500 µm und einem Raumgewicht von 250 kg/m³ hinzukaschiert.

Auf diesen Schaumträger wird über einen Transferträger eine handelsübliche Acrylathaftklebemasse mit einem Masseauftrag von 60 g/m² auf die unbeschichtete Seite des vorherigen Verbundes auflaminiert (offenliegende Acrylathaftklebeschicht).

### 3. Bewertung der Ablösbarkeit von Druckplatten:

Die Versuche zur Bewertung der Ablösbarkeit von Druckplatten, welche mit gemäß Punkt 2 hergestellten Haftklebebändern verklebt sind, und zur Untersuchung des Einflusses von Cellulosenitrat auf die Ablösbarkeit werden bei einem Prüfklima mit einer Temperatur von 23 °C +/- 1 °C einer rel. Luftfeuchte von 50 % +/- 5 % durchgeführt.

Als Klischee wird in den Versuchen eine vollflächig belichtete Druckplatte der Fa. DuPont Cyrel HOS mit der Abmessung Länge 420 mm x Breite 330 mm x Dicke 1,14 mm eingesetzt. Zum Erhalt der Klischees für die Referenzproben wird die PET-Seite des Klischees mit Isopropanol gereinigt und für 5 Minuten an der Luft trocknen gelassen, damit das Lösemittel vollständig abdampfen kann.

Zum Erhalt von mit Cellulosenitrat verunreinigten Klischees wird die wie vorstehend beschrieben gereinigte PET-Seite der Klischees zusätzlich mithilfe eines Stück Zellstoffs mit der Abmessung Länge 30 mm x Breite 30 mm x Dicke 4 mm mit 5 mL einer Cellulosenitrat-Lösung (0,1 % Cellulosenitrat in 99 % Ethanol) bestrichen. Dies erfolgt in Streifen zunächst horizontal, wobei das Klischee vollflächig mit der Lösung benetzt wird. Anschließend wird das Klischee mit demselben Zellstoffstück ein zweites Mal, dies Mal in vertikale Richtung, bestrichen. Anschließend wird das Klischee für 1 Minute an der Luft liegen gelassen, damit das Lösungsmittel abdampfen kann.

Aus dem jeweils zu untersuchenden doppelseitigen Haftklebeband werden 480 mm x 340 mm großes Muster geschnitten. Diese Muster werden mit der offenliegenden Acrylathaftklebeschicht so auf einen Stahlzylinder mit einem Durchmesser von 110 mm geklebt, dass die längeren Kanten der Muster in Längsrichtung des Zylinders ausgerichtet sind. Anschließend wird das Abdeckmaterial abgezogen, so dass die Schicht der zu untersuchenden Haftklebemasse offen liegt.

Auf die derart verklebten Haftklebebänder werden die Klischees für die Referenzproben bzw. die mit Cellulosenitrat verunreinigten Klischees so auf die jeweilige Haftklebemasse verklebt, dass an den vertikalen Klischeekanten je 20 mm des darunterliegenden Haftklebebandes überstehen (zentrierte Aufbringung auf dem Haftklebeverbund-Muster).

Anschließend wird das jeweilige Klischee ausgehend von der oberen Klischeekante mit einer Gummi-Rolle (Breite 100 mm, Durchmesser 30 mm, Shore-Härte A 45) angerollt. Die Anrollbewegung verläuft dabei in Längsrichtung des Druckzylinders und wird kontinuierlich von jeweils einer Längskante des Klischees zur gegenüberliegenden Längskante des Klischees und wieder zurück ausgeführt. Die Anrollgeschwindigkeit beträgt dabei in Querrichtung 10 m/min. Der Druckzylinder rotiert gleichzeitig mit einer Oberflächengeschwindigkeit von 0,6 m/min, so dass mit der Gummirolle relativ zum Druckklischee eine Zick-Zack Bewegung in Richtung auf die zweite Querkante des Klischees beschrieben wird. Die Montage des Klischees auf dem Haftklebeband erfolgt mit der entsprechenden Anpresskraft, die erforderlich ist, um das Klischee vollflächig und ohne Kantenabheben zu fixieren. Der Stahlzylinder wird mit dem jeweiligen Haftklebeband und dem jeweils verklebten Klischee senkrecht auf einer seiner Stirnseiten stehend für 72 Stunden bei 40 °C gelagert.

Die für die Demontage der jeweiligen Klischees benötigte subjektiv aufzuwendende Kraft wird von einer erfahrenen Arbeitskraft beurteilt. Die Demontage wird im Stehen durchgeführt, die Füße schulterbreit auseinander. Das Klischee wird mit beiden Händen an einer zur Längsrichtung des Stahlzylinders verlaufenden Kante angefasst und mit etwa 300 mm/min in Querrichtung zum Stahlzylinder (radial) abgezogen.

Die Bewertung des Kraftaufwandes und des Ablöseverhaltens erfolgt unter Verwendung einer in der Branche genutzten qualitativen Bewertungsskala von 1 bis 5 (1: Sehr leicht, 2: Leicht, 3: Akzeptabel, 4: Schwer, 5: Sehr schwer).

Eine Haftklebemassen gilt dabei dann als geeignet, wenn das Ablöseverhalten der Referenzprobe, d.h. mit einem gereinigten Klischee ohne Einfluss von Cellulosenitrat, mit 1 oder 2 und zudem das Ablöseverhalten der Testprobe, d.h. mit Einfluss von Cellulosenitrat, mit 1, 2 oder 3 bewertet wird.

Die erhaltenen Ergebnisse sind in der Tabelle 4 zusammengefasst.

**Tabelle 4 - Ablöseverhalten**

| HKM | Referenzprobe | Testprobe | HKM | Referenzprobe | Testprobe |
|---|---|---|---|---|---|
| V1 | 3 | 5 | E1 | 2 | 2 |
| V2 | 2 | 4 | E2 | 1 | 1 |
| V3 | 2 | 5 | E3 | 2 | 3 |
| V4 | 2 | 5 | E4 | 1 | 2 |
| V5 | 2 | 5 | E5 | 1 | 2 |
| V6 | 2 | 5 | E6 | 2 | 3 |
| V7 | 3 | 4 | E7 | 1 | 3 |
| V8 | 3 | 4 | E8 | 2 | 3 |
| V9 | 3 | 4 | E9 | 1 | 2 |
| V10 | 1 | 5 | E10 | 1 | 2 |
| V11 | 2 | 5 | E11 | 2 | 3 |
| V12 | 3 | 5 | E12 | 1 | 2 |
| V13 | 2 | 5 | E13 | 1 | 2 |
| V14 | 2 | 5 | E14 | 2 | 3 |
| V15 | 2 | 5 | E15 | 2 | 2 |
| V16 | 3 | 5 | | | |

Die in Tabelle 4 zusammengestellten Ergebnisse bestätigen, dass sämtliche der erfindungsgemäßen Haftklebemassen für die Verwendung geeignet sind und auch nach Behandlung mit Cellulosenitrat zumindest noch eine akzeptable Ablösbarkeit bzw. in vielen Fällen sogar eine leichte oder gar sehr leichte Ablösbarkeit gewährleisten.

Der Vergleich erfindungsgemäßer Haftklebemassen mit Vergleichsproben, die weniger als 10 % an ersten Monomeren umfassen, zeigt deutlich, dass eine Mindestmenge dieser Monomere benötigt wird, wobei die generelle klebtechnische Leistungsfähigkeit der Haftklebemassen ab etwa 15 % merklich schlechter und ab 20 % regelmäßig unzureichend wird.

Zur Lösung der Aufgabe sind die spezifischen zweiten Monomere wichtig, wobei die Experimente den positiven Einfluss für unterschiedliche Monomere in verschiedenen Poly(meth)acrylaten und sehr unterschiedliche Massenanteile belegen können, wobei sich der vorteilhafte Effekt auch mit Kombinationen der zweiten Monomere erzielen lässt.

Die hohe Relevanz der spezifischen Auswahl der zweiten Monomere zeigt sich dabei besonders im Vergleich von solchen Poly(meth)acrylaten, die statt Propylheptylacrylat das weniger verzweigte Methylnonylacrylat einsetzen, da hier bei gleicher Summenformel sehr unterschiedliche Klebeeigenschaften beobachtet werden.

Die Experimente dokumentieren zudem den überraschenden negativen Einfluss von i-Bornylacrylat, welches dieses bei größeren Massenanteilen ausübt.

Es ist deutlich zu erkennen, dass besonders leistungsfähige Haftklebemassen mit großen Massenanteilen an zweiten Monomeren erhalten werden, wobei insbesondere zweite Monomere der ersten Oder-Alternative, beispielsweise i-Heptadecylacrylat, zu ausgezeichneten Ergebnissen führen.

## Patentansprüche

1. Haftklebemasse für die Verklebung von Druckplatten, umfassend ein oder mehrere Poly(meth)acrylate in einem kombinierten Massenanteil von 50 % oder mehr, bezogen auf die Masse der Haftklebemasse,
wobei das eine oder die mehreren Poly(meth)acrylate herstellbar sind durch Polymerisation einer Monomerzusammensetzung umfassend bezogen auf die Masse der Monomerzusammensetzung:
i) ein oder mehrere erste Monomere, die ausgewählt sind aus der Gruppe bestehend aus Acrylsäure, Methacrylsäure, Dimethylacrylamid, Hydroxybutylacrylat, Hydroxypropylacrylat und Hydroxyethylacrylat in einem kombinierten Massenanteil im Bereich von 10 bis 20 %, und
ii) ein oder mehrere zweite Monomere, die ausgewählt sind aus der Gruppe bestehend aus (Meth)acrylsäureestern gemäß der Formel (I),
CH₂=CR¹-C(O)O-CHR²R³ (I),
wobei R¹ für ein Wasserstoffatom oder eine Methylgruppe steht, wobei entweder i) R² für ein Wasserstoffatom und R³ für eine verzweigte Alkylgruppe mit 16 bis 20 C-Atomen steht, oder ii) R² für eine lineare oder verzweigte Alkylgruppe mit 3 bis 10 C-Atomen und R³ für lineare oder verzweigte Alkylgruppe mit 6 bis 10 C-Atomen steht, in einem kombinierten Massenanteil im Bereich von 20 bis 90 %.

2. Haftklebemasse nach Anspruch 1, wobei der kombinierte Massenanteil des einen oder der mehreren Poly(meth)acrylate 60 % oder mehr, bevorzugt 70 % oder mehr, besonders bevorzugt 80 % oder mehr, ganz besonders bevorzugt 90 % oder mehr, beträgt, bezogen auf die Masse der Haftklebemasse.

3. Haftklebemasse nach einem der Ansprüche 1 oder 2, wobei die Monomerzusammensetzung bezogen auf die Masse der Monomerzusammensetzung:
i1) das eine oder die mehreren ersten Monomere, in einem kombinierten Massenanteil im Bereich von 10 bis 15 %, bevorzugt im Bereich von 10 bis 13 %, umfasst, und/oder
ii1) das eine oder die mehreren zweiten Monomere, in einem kombinierten Massenanteil im Bereich von 40 bis 90 %, bevorzugt im Bereich von 60 bis 90 %, umfasst, und/oder
iii1) einen kombinierten Massenanteil von höchstens 8 %, bevorzugt höchstens 5 %, besonders bevorzugt höchstens 2 %, ganz besonders bevorzugt von höchstens 1 %, an den dritten Monomeren umfasst, wobei die Monomerzusammensetzung bevorzugt im Wesentlich frei von dritten Monomeren ist.

4. Haftklebemasse nach einem der Ansprüche 1 bis 3, wobei in der Monomerzusammensetzung:
i2) das eine oder die mehreren ersten Monomere ausgewählt sind aus der Gruppe bestehend aus Acrylsäure, Methacrylsäure und Dimethylacrylamid, bevorzugt Acrylsäure und Methacrylsäure, besonders bevorzugt Acrylsäure, und/oder
ii2) das eine oder die mehreren zweiten Monomere ausgewählt sind aus der Gruppe bestehend aus (Meth)acrylsäureestern, bevorzugt Acrylsäureestern, gemäß der Formel (I),
CH₂=CR¹-C(O)O-CHR²R³ (I),
wobei R¹ für ein Wasserstoffatom oder eine Methylgruppe, bevorzugt ein Wasserstoffatom, steht, wobei entweder i) R² für ein Wasserstoffatom und R³ für eine verzweigte Alkylgruppe mit 16 bis 19 C-Atomen, bevorzugt mit 16 bis 18 C-Atomen, steht, oder ii) R² für eine lineare oder verzweigte, bevorzugt lineare, Alkylgruppe mit 3 bis 8 C-Atomen, bevorzugt mit 3 bis 5 C-Atomen, und R³ für lineare oder verzweigte, bevorzugt lineare, Alkylgruppe mit 4 bis 9 C-Atomen, bevorzugt mit 5 bis 8 C-Atomen, steht.

5. Haftklebemasse nach Anspruch 4, wobei in der Monomerzusammensetzung:
ii3) das eine oder die mehreren zweiten Monomere ausgewählt sind aus der Gruppe bestehend aus i-Heptadecyl(meth)acrylat und Propylheptyl(meth)acrylat, bevorzugt i-Heptadecylacrylat und Propylheptylacrylat.

6. Haftklebemasse nach einem der Ansprüche 1 bis 5, wobei die Monomerzusammensetzung ein oder mehrere zweite Monomere umfasst, in denen R² für ein Wasserstoffatom und R³ für eine verzweigte Alkylgruppe mit 16 bis 20 C-Atomen steht, bevorzugt in einem in einem kombinierten Massenanteil im Bereich von 20 bis 70 %, besonders bevorzugt im Bereich von 25 bis 65 %, und ein oder mehrere zweite Monomere umfasst, in denen R³ für eine lineare oder verzweigte Alkylgruppe mit 3 bis 10 C-Atomen und R³ für lineare oder verzweigte Alkylgruppe mit 6 bis 10 C-Atomen steht, bevorzugt in einem kombinierten Massenanteil im Bereich von 20 bis 70 %, besonders bevorzugt im Bereich von 25 bis 65 %.

7. Haftklebemasse nach einem der Ansprüche 1 bis 6, wobei die Monomerzusammensetzung umfasst:
iv) ein oder mehrere vierte Monomere, die ausgewählt sind aus der Gruppe bestehend aus (Meth)acrylsäureestern, bevorzugt Acrylsäureestern, gemäß der Formel (II),
CH₂=CR¹-C(O)O-R⁴ (II),
wobei R¹ für ein Wasserstoffatom oder eine Methylgruppe, bevorzugt ein Wasserstoffatom, steht, wobei R³ für eine verzweigte Alkylgruppe mit 3 bis 16 C-Atomen, bevorzugt mit 3 bis 12 C-Atomen, oder einen Phenoxyalkylrest mit 8 bis 16 C-Atomen, bevorzugt mit 8 bis 12 C-Atomen, steht, bevorzugt in einem kombinierten Massenanteil im Bereich von 10 bis 65 %, besonders bevorzugt im Bereich von 30 bis 60 %, ganz besonders bevorzugt im Bereich von 40 bis 50 %, bezogen auf die Masse der Monomerzusammensetzung.

8. Haftklebemasse nach Anspruch 7, wobei die Monomerzusammensetzung bezogen auf die Masse der Monomerzusammensetzung erste Monomere, zweite Monomere und vierte Monomere in einem kombinierten Massenanteil von 80 % oder mehr, bevorzugt 90 % oder mehr, besonders bevorzugt 95 % oder mehr, ganz besonders bevorzugt 98 % oder mehr, insbesondere bevorzugt 99 % oder mehr, umfasst.

9. Haftklebeband, umfassend eine Trägerschicht und als Haftklebemasse eine Haftklebemasse nach einem der Ansprüche 1 bis 8.

10. Verwendung einer Haftklebemasse nach einem der Ansprüche 1 bis 8 oder eines Haftklebebandes nach Anspruch 9 zur Befestigung von Druckplatten, insbesondere flexiblen Druckplatten, auf einem Druckzylinder oder einer Druckhülse, zur Verbesserung der Ablösbarkeit der Druckplatten bei der Verarbeitung von Cellulosenitrat-haltiger Farbe.
